# EUROPEAN PATENT APPLICATION

(11) **EP 2 337 365 A2**
(43) Date of publication of application: **22.06.2011**
(21) Application number: 10015630.6
(22) Date of filing: 14.12.2010
(51) Int. Cl.: H04N 13/00

(54) **Method and system for pulldown processing for 3D video**

(30) Priority: 17.12.2009 US 287682 P; 18.02.2010 US 707822
(71) Applicant: Broadcom Corporation, Irvine, CA 92617 (US)
(72) Inventor: Kellerman, Marcus, San Diego, CA 92172 (US); Chen, Xuemin, Rancho Sante Fé, CA 92067 (US); Hulyalkar, Samir, Newtown, PA 18940 (US); Klebanov, llya, Thornhill, ON L3T 3C9 (CA)
(74) Representative: Jehle, Volker Armin

(57) **Abstract**

A video processing device may perform pulldown when generating an output video stream that corresponds to received input 3D video stream. The pulldown may be performed based on determined native characteristics of the received input 3D video stream and display parameters corresponding to display device used for presenting the generated output video stream. The native characteristics of the received input 3D video stream may comprise film mode, which may be used to determine capture frame rate. The display parameters may comprise scan mode and/or display frame rate. A left view or a right view frame in every group of frames in the input 3D video stream comprising two consecutive left view frames and corresponding two consecutive right view frames may be duplicated when the input 3D video stream comprises a film mode with 24 fps capture frame rate and the display device uses 60 Hz progressive scanning.

## Description

### CROSS-REFERENCE TO RELATED APPLICATIONS/INCORPORATION BY REFERENCE

This patent application makes reference to, claims priority to and claims benefit from United States Provisional Application Serial No. 61/287,682 (Attorney Docket Number 20695US01) which was filed on December 17, 2009.

This application also makes reference to:
United States Provisional Application Serial No. 61/287,624 (Attorney Docket Number 20677US01) which was filed on December 17, 2009;
United States Provisional Application Serial No. 61/287,634 (Attorney Docket Number 20678US01) which was filed on December 17, 2009;
United States Application Serial No. 12/554,416 (Attorney Docket Number 20679US01) which was filed on September 4, 2009;
United States Application Serial No. 12/546,644 (Attorney Docket Number 20680US01) which was filed on August 24, 2009;
United States Application Serial No. 12/619,461 (Attorney Docket Number 20681 US01) which was filed on November 6, 2009;
United States Application Serial No. 12/578,048 (Attorney Docket Number 20682US01) which was filed on October 13, 2009;
United States Provisional Application Serial No. 61/287,653 (Attorney Docket Number 20683US01) which was filed on December 17, 2009;
United States Application Serial No. 12/604,980 (Attorney Docket Number 20684US02) which was filed on October 23, 2009;
United States Application Serial No. 12/545,679 (Attorney Docket Number 20686US01) which was filed on August 21, 2009;
United States Application Serial No. 12/560,554 (Attorney Docket Number 20687US01) which was filed on September 16, 2009;
United States Application Serial No. 12/560,578 (Attorney Docket Number 20688US01) which was filed on September 16, 2009;
United States Application Serial No. 12/560,592 (Attorney Docket Number 20689US01) which was filed on September 16, 2009;
United States Application Serial No. 12/604,936 (Attorney Docket Number 20690US01) which was filed on October 23, 2009;
United States Provisional Application Serial No. 61/287,668 (Attorney Docket Number 20691 US01) which was filed on December 17, 2009;
United States Application Serial No. 12/573,746 (Attorney Docket Number 20692US01) which was filed on October 5, 2009;
United States Application Serial No. 12/573,771 (Attorney Docket Number 20693US01) which was filed on October 5, 2009;
United States Provisional Application Serial No. 61/287,673 (Attorney Docket Number 20694US01) which was filed on December 17, 2009;
United States Application Serial No. 12/605,039 (Attorney Docket Number 20696US01) which was filed on October 23, 2009;
United States Provisional Application Serial No. 61/287,689 (Attorney Docket Number 20697US01) which was filed on December 17, 2009; and
United States Provisional Application Serial No. 61/287,692 (Attorney Docket Number 20698US01) which was filed on December 17, 2009.

Each of the above stated applications is hereby incorporated herein by reference in its entirety

### FEDERALLY SPONSORED RESEARCH OR DEVELOPMENT

[Not Applicable].

### [MICROFICHE/COPYRIGHT REFERENCE]

[Not Applicable].

### FIELD OF THE INVENTION

Certain embodiments of the invention relate to video processing. More specifically, certain embodiments of the invention relate to a method and system for pulldown processing for 3D video.

### BACKGROUND OF THE INVENTION

Display devices, such as television sets (TVs), may be utilized to output or playback audiovisual or multimedia streams, which may comprise TV broadcasts, telecasts and/or localized Audio/Video (A/V) feeds from one or more available consumer devices, such as videocassette recorders (VCRs) and/or Digital Video Disc (DVD) players. TV broadcasts and/or audiovisual or multimedia feeds may be inputted directly into the TVs, or it may be passed intermediately via one or more specialized set-top boxes that may enable providing any necessary processing operations. Exemplary types of connectors that may be used to input data into TVs include, but not limited to, F-connectors, S-video, composite and/or video component connectors, and/or, more recently, High-Definition Multimedia Interface (HDMI) connectors.

Television broadcasts are generally transmitted by television head-ends over broadcast channels, via RF carriers or wired connections. TV head-ends may comprise terrestrial TV head-ends, Cable-Television (CATV), satellite TV head-ends and/or broadband television head-ends. Terrestrial TV head-ends may utilize, for example, a set of terrestrial broadcast channels, which in the U.S. may comprise, for example, channels 2 through 69. Cable-Television (CATV) broadcasts may utilize even greater number of broadcast channels. TV broadcasts comprise transmission of video and/or audio information, wherein the video and/or audio information may be encoded into the broadcast channels via one of plurality of available modulation schemes. TV Broadcasts may utilize analog and/or digital modulation format. In analog television systems, picture and sound information are encoded into, and transmitted via analog signals, wherein the video/audio information may be conveyed via broadcast signals, via amplitude and/or frequency modulation on the television signal, based on analog television encoding standard. Analog television broadcasters may, for example, encode their signals using NTSC, PAL and/or SECAM analog encoding and then modulate these signals onto a VHF or UHF RF carriers, for example.

In digital television (DTV) systems, television broadcasts may be communicated by terrestrial, cable and/or satellite head-ends via discrete (digital) signals, utilizing one of available digital modulation schemes, which may comprise, for example, QAM, VSB, QPSK and/or OFDM. Because the use of digital signals generally requires less bandwidth than analog signals to convey the same information, DTV systems may enable broadcasters to provide more digital channels within the same space otherwise available to analog television systems. In addition, use of digital television signals may enable broadcasters to provide high-definition television (HDTV) broadcasting and/or to provide other non-television related service via the digital system. Available digital television systems comprise, for example, ATSC, DVB, DMB-T/H and/or ISDN based systems. Video and/or audio information may be encoded into digital television signals utilizing various video and/or audio encoding and/or compression algorithms, which may comprise, for example, MPEG-1/2, MPEG-4 AVC, MP3, AC-3, AAC and/or HE-AAC.

Nowadays most TV broadcasts (and similar multimedia feeds), utilize video formatting standard that enable communication of video images in the form of bit streams. These video standards may utilize various interpolation and/or rate conversion functions to present content comprising still and/or moving images on display devices. For example, de-interlacing functions may be utilized to convert moving and/or still images to a format that is suitable for certain types of display devices that are unable to handle interlaced content. TV broadcasts, and similar video feeds, may be interlaced or progressive. Interlaced video comprises fields, each of which may be captured at a distinct time interval. A frame may comprise a pair of fields, for example, a top field and a bottom field. The pictures forming the video may comprise a plurality of ordered lines. During one of the time intervals, video content for the even-numbered lines may be captured. During a subsequent time interval, video content for the odd-numbered lines may be captured. The even-numbered lines may be collectively referred to as the top field, while the odd-numbered lines may be collectively referred to as the bottom field. Alternatively, the odd-numbered lines may be collectively referred to as the top field, while the even-numbered lines may be collectively referred to as the bottom field. In the case of progressive video frames, all the lines of the frame may be captured or played in sequence during one time interval. Interlaced video may comprise fields that were converted from progressive frames. For example, a progressive frame may be converted into two interlaced fields by organizing the even numbered lines into one field and the odd numbered lines into another field.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for pulldown processing for 3D video, substantially as shown in and/or described in connection with at least one of the figures, as set forth more completely in the claims.
According to an aspect, a method for video processing comprises:
performing by one or more processors and/or circuits in a video processing system:
   determining one more native characteristics associated with an input three dimensional (3D) video stream; and
   generating one or more output video streams that correspond to said input 3D video stream, wherein a pulldown of said input 3D video stream is modified based on said determined one or more native characteristics and display parameters corresponding to a one or more display devices that are utilized for presenting said generated one or more output video streams.
Advantageously, said one more native characteristics associated with said input 3D video stream comprise film mode.
Advantageously, the method further comprises determining frame rate of said input 3D video stream based on said determined one more native characteristics associated with said input 3D video stream.
Advantageously, the method further comprises dynamically determining said display parameters.
Advantageously, said display parameters comprise display frame rate and/or scan mode.
Advantageously, said scan mode comprises progressive or interlaced scanning.
Advantageously, said input 3D video stream comprises sequences of left and right reference frames or fields.
Advantageously, the method further comprises forwarding left view frames and corresponding right view frames to said one or more display devices without any frame duplication when said one more native characteristics associated with said input 3D video stream comprises a film mode with 25 frame per second (fps) frame rate and said display parameters comprise 50 Hz progressive scanning.
Advantageously, the method further comprises duplicating a left view frame or a right view frame for every group of four frames in said input 3D video stream comprising two consecutive left view frames and corresponding two consecutive right view frames when said one more native characteristics associated with said input 3D video stream comprises a film mode with 24 frame per second (fps) frame rate and said display parameters comprise 60 Hz progressive scanning.
Advantageously, the method further comprises selecting said duplicated frame based on a last buffered frame during said processing of said output video stream.
According to an aspect, a system for video processing comprises:
one or more circuits and/or processors that are operable to determining one more native characteristics associated with an input three dimensional (3D) video stream; and
said one or more circuits and/or processors are operable to generate one or more output video streams that correspond to said input 3D video stream, wherein a pulldown of said input 3D video stream is modified based on said determined one or more native characteristics and display parameters corresponding to a one or more display devices that are utilized for presenting said generated one or more output video streams.
Advantageously, said one more native characteristics associated with said input 3D video stream comprise film mode.
Advantageously, said one or more circuits and/or processors are operable to determine frame rate of said input 3D video stream based on said determined one more native characteristics associated with said input 3D video stream.
Advantageously, said one or more circuits and/or processors are operable to dynamically determine said display parameters.
Advantageously, said display parameters comprise display frame rate and/or scan mode.
Advantageously, said scan mode comprises progressive or interlaced scanning.
Advantageously, said input 3D video stream comprises sequences of left and right reference frames or fields.
Advantageously, said one or more circuits and/or processors are operable to forward left view frames and corresponding right view frames to said one or more display devices without any frame duplication when said one more native characteristics associated with said input 3D video stream comprises a film mode with 25 frame per second (fps) frame rate and said display parameters comprise 50 Hz progressive scanning.
Advantageously, said one or more circuits and/or processors are operable to duplicate a left view frame or a right view frame for every group of four frames in said input 3D video stream comprising two consecutive left view frames and corresponding two consecutive right view frames when said one more native characteristics associated with said input 3D video stream comprises a film mode with 24 frame per second (fps) frame rate and said display parameters comprise 60 Hz progressive scanning.
Advantageously, said one or more circuits and/or processors are operable to select said duplicated frame based on a last buffered frame during said processing of said output video stream.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary video system that supports TV broadcasts and/or local multimedia feeds, in accordance with an embodiment of the invention.

FIG. 2A is a block diagram illustrating an exemplary video system that may be operable to provide communication of 3D video, in accordance with an embodiment of the invention.

FIG. 2B is a block diagram illustrating an exemplary video processing system that may be operable to generate video streams comprising 3D video, in accordance with an embodiment of the invention.

FIG. 2C is a block diagram illustrating an exemplary video processing system that may be operable to process and display video input comprising 3D video, in accordance with an embodiment of the invention.

FIG. 3A is a block diagram illustrating an exemplary method for providing 3:2 pulldown for a traditional 2D video stream, in connection with an embodiment of the invention.

FIG. 3B is a block diagram illustrating an exemplary method for providing 3:2 pulldown for a 3D video stream, in accordance with an embodiment of the invention.

FIG. 3C is a block diagram illustrating an exemplary method for providing 2:2 pulldown for a traditional 2D video stream, in connection with an embodiment of the invention.

FIG. 3D is a block diagram illustrating an exemplary method for providing 2:2 pulldown for a 3D video stream, in accordance with an embodiment of the invention.

FIG. 4 is a flow chart that illustrates exemplary steps for performing pulldown processing for 3D video, in accordance with an embodiment of the invention.

### DETAILED DESCRIPTION OF THE INVENTION

Certain embodiments of the invention may be found in a method and system for pulldown processing for 3D video. In various embodiments of the invention, a video processing device may be operable to receive and process input video streams that may comprise 3D video. The video processing device may determine native characteristics associated with a received input three dimensional (3D) video stream and may generate an output video stream that correspond to the input 3D video stream, wherein a pulldown of the input 3D video stream may be performed and/or modified based on the determined native characteristics of the input 3D video stream and display parameters corresponding to a display device that may be utilized for presenting the generated output video stream. The native characteristics associated with the input 3D video stream may comprise film mode which may indicate that the received input 3D video stream may comprise video content generated and/or captures for films. The capture and/or generation frame rate of the input 3D video stream may be determined based on, for example, the determined native characteristics associated with the input 3D video stream. The display parameters may be determined dynamically via the video processing device. The display parameters comprise display frame rate and/or scan mode, wherein the scan mode may comprise progressive or interlaced scanning. The input 3D video stream may comprise stereoscopic 3D video content that may correspond to sequences of left and right reference frames or fields.

In instances where the native characteristics associated with the input 3D video stream comprise a film mode with 25 fps frame rate and the display parameters corresponding to the display parameters comprise 50 Hz progressive scanning, received left and right view sequences of frame may be forwarded without change to achieve 3:2 pulldown. In instances where the native characteristics associated with the input 3D video stream comprise a film mode with 24 fps frame rate and the display parameters corresponding to the display parameters comprise 60 Hz progressive scanning, 3:2 pulldown may achieved by duplicating a left view frame or a right view frame in every group of four frames in the input 3D video stream comprising two consecutive left view frames and corresponding two consecutive right view frames. The duplicated frame may be selected based on a last buffered frame during the processing of the output video stream.

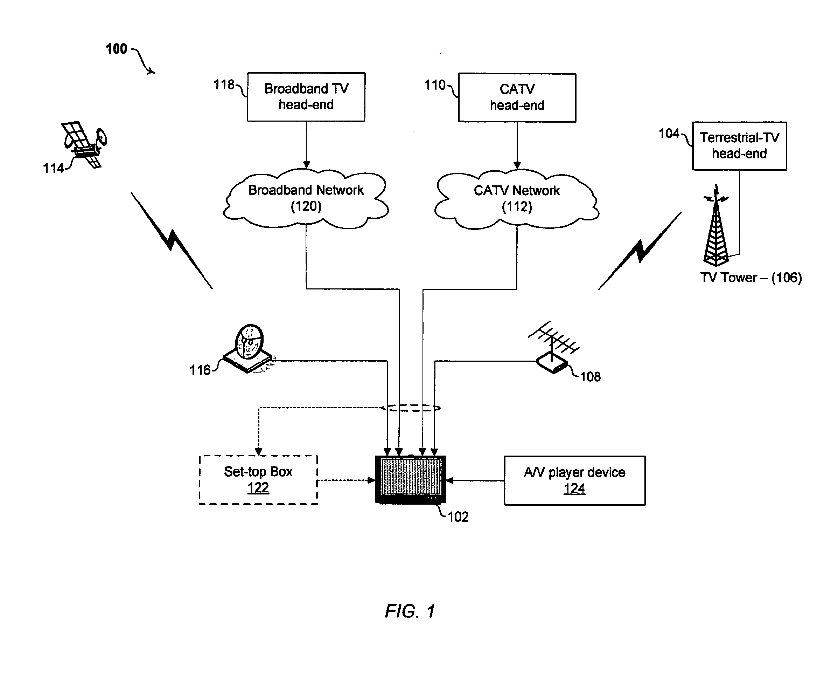

FIG. 1 is a block diagram illustrating an exemplary video system that supports TV broadcasts and/or local multimedia feeds, in accordance with an embodiment of the invention. Referring to FIG. 1, there is shown a media system 100 which may comprise a display device 102, a terrestrial-TV head-end 104, a TV tower 106, a TV antenna 108, a cable-TV (CATV) head-end 110, a cable-TV (CATV) distribution network 112, a satellite-TV head-end 114, a satellite-TV receiver 116, a broadband-TV head-end 118, a broadband network 120, a set-top box 122, and an audio-visual (AV) player device 124.

The display device 102 may comprise suitable logic, circuitry, interfaces and/or code that enable playing of multimedia streams, which may comprise audio-visual (AV) data. The display device 102 may comprise, for example, a television, a monitor, and/or other display and/or audio playback devices, and/or components that may be operable to playback video streams and/or corresponding audio data, which may be received, directly by the display device 102 and/or indirectly via intermediate devices, such as the set-top box 122, and/or from local media recording/playing devices and/or storage resources, such as the AV player device 124.

The terrestrial-TV head-end 104 may comprise suitable logic, circuitry, interfaces and/or code that may enable over-the-air broadcast of TV signals, via one or more of the TV tower 106. The terrestrial-TV head-end 104 may be enabled to broadcast analog and/or digital encoded terrestrial TV signals. The TV antenna 108 may comprise suitable logic, circuitry, interfaces and/or code that may enable reception of TV signals transmitted by the terrestrial-TV head-end 104, via the TV tower 106. The CATV head-end 110 may comprise suitable logic, circuitry, interfaces and/or code that may enable communication of cable-TV signals. The CATV head-end 110 may be enabled to broadcast analog and/or digital formatted cable-TV signals. The CATV distribution network 112 may comprise suitable distribution systems that may enable forwarding of communication from the CATV head-end 110 to a plurality of cable-TV recipients, comprising, for example, the display device 102. For example, the CATV distribution network 112 may comprise a network of fiber optics and/or coaxial cables that enable connectivity between one or more instances of the CATV head-end 110 and the display device 102.

The satellite-TV head-end 114 may comprise suitable logic, circuitry, interfaces and/or code that may enable down link communication of satellite-TV signals to terrestrial recipients, such as the display device 102. The satellite-TV head-end 114 may comprise, for example, one of a plurality of orbiting satellite nodes in a satellite-TV system. The satellite-TV receiver 116 may comprise suitable logic, circuitry, interfaces and/or code that may enable reception of downlink satellite-TV signals transmitted by the satellite-TV head-end 114. For example, the satellite receiver 116 may comprise a dedicated parabolic antenna operable to receive satellite television signals communicated from satellite television head-ends, and to reflect and/or concentrate the received satellite signal into focal point wherein one or more low-noise-amplifiers (LNAs) may be utilized to down-convert the received signals to corresponding intermediate frequencies that may be further processed to enable extraction of audio/video data, via the set-top box 122 for example. Additionally, because most satellite-TV downlink feeds may be securely encoded and/or scrambled, the satellite-TV receiver 116 may also comprise suitable logic, circuitry, interfaces and/or code that may enable decoding, descrambling, and/or deciphering of received satellite-TV feeds.

The broadband-TV head-end 118 may comprise suitable logic, circuitry, interfaces and/or code that may enable multimedia/TV broadcasts via the broadband network 120. The broadband network 120 may comprise a system of interconnected networks, which enables exchange of information and/or data among a plurality of nodes, based on one or more networking standards, including, for example, TCP/IP. The broadband network 120 may comprise a plurality of broadband capable sub-networks, which may include, for example, satellite networks, cable networks, DVB networks, the Internet, and/or similar local or wide area networks, that collectively enable conveying data that may comprise multimedia content to plurality of end users. Connectivity may be provide via the broadband network 120 based on copper-based and/or fiber-optic wired connection, wireless interfaces, and/or other standards-based interfaces. The broadband-TV head-end 118 and the broadband network 120 may correspond to, for example, an Internet Protocol Television (IPTV) system.

The set-top box 122 may comprise suitable logic, circuitry, interfaces and/or code that may enable processing of TV and/or multimedia streams/signals transmitted by one or more TV head-ends external to the display device 102. The AV player device 124 may comprise suitable logic, circuitry, interfaces and/or code that enable providing video/audio feeds to the display device 102. For example, the AV player device 124 may comprise a digital video disc (DVD) player, a Blu-ray player, a digital video recorder (DVR), a video game console, a surveillance system, and/or a personal computer (PC) capture/playback card. While the set-top box 122 and the AV player device 124 are shown are separate entities, at least some of the functions performed via the top box 122 and/or the AV player device 124 may be integrated directly into the display device 102.

In operation, the display device 102 may be utilized to playback media streams received from one of available broadcast head-ends, and/or from one or more local sources. The display device 102 may receive, for example, via the TV antenna 108, over-the-air TV broadcasts from the terrestrial-TV head end 104 transmitted via the TV tower 106. The display device 102 may also receive cable-TV broadcasts, which may be communicated by the CATV head-end 110 via the CATV distribution network 112; satellite TV broadcasts, which may be communicated by the satellite head-end 114 and received via the satellite receiver 116; and/or Internet media broadcasts, which may be communicated by the broadband-TV head-end 118 via the broadband network 120.

TV head-ends may utilize various formatting schemes in TV broadcasts. Historically, TV broadcasts have utilized analog modulation format schemes, comprising, for example, NTSC, PAL, and/or SECAM. Audio encoding may comprise utilization of separate modulation scheme, comprising, for example, BTSC, NICAM, mono FM, and/or AM. More recently, however, there has been a steady move towards Digital TV (DTV) based broadcasting. For example, the terrestrial-TV head-end 104 may be enabled to utilize ATSC and/or DVB based standards to facilitate DTV terrestrial broadcasts. Similarly, the CATV head-end 110 and/or the satellite head-end 114 may also be enabled to utilize appropriate encoding standards to facilitate cable and/or satellite based broadcasts.

The display device 102 may be operable to directly process multimedia/TV broadcasts to enable playing of corresponding video and/or audio data. Alternatively, an external device, for example the set-top box 122, may be utilized to perform processing operations and/or functions, which may be operable to extract video and/or audio data from received media streams, and the extracted audio/video data may then be played back via the display device 102.

In exemplary aspect of the invention, the media system 100 may be operable to support three-dimension (3D) video. Most video content is currently generated and played in two-dimensional (2D) format. There has been a recent push, however, towards the development and/or use of three-dimensional (3D) video. In various video related applications such as, for example, DVD/Blu-ray movies and/or digital TV, 3D video may be more desirable because it may be more realistic to humans to perceive 3D rather than 2D images. Various methodologies may be utilized to capture, generate (at capture or playtime), and/or render 3D video images. One of the more common methods for implementing 3D video is stereoscopic 3D video. In stereoscopic 3D video based application the 3D video impression is generated by rendering multiple views, most commonly two views: a left view and a right view, corresponding to the viewer's left eye and right eye to give depth to displayed images. In this regard, left view and right view video sequences may be captured and/or processed to enable creating 3D images. The left view and right view data may then be communicated either as separate streams, or may be combined into a single transport stream and only separated into different view sequences by the end-user receiving/displaying device. The stereoscopic 3D video may be communicated utilizing TV broadcasts. In this regard, one or more of the TV head-ends may be operable to communicate 3D video content to the display device 102, directly and/or via the set-top box 122. The communication of stereoscopic 3D video may also be performed by use of multimedia storage devices, such as DVD or Blu-ray discs, which may be used to store 3D video data that subsequently may be played back via an appropriate player, such as the AV player device 124. Various compression/encoding standards may be utilized to enable compressing and/or encoding of the view sequences into transport streams during communication of stereoscopic 3D video. For example, the separate left and right view video sequences may be compressed based on MPEG-2 MVP, H.264 and/or MPEG-4 advanced video coding (AVC) or MPEG-4 multi-view video coding (MVC).

In various embodiments of the invention, pulldown may be performed on input 3D video during video processing at time of display and/or playback. In this regard, pulldown refers to frame related manipulations to account for variations between the input video stream frame rate and display frame rates. For example, films are generally captured at 24 or 25 frame per second (fps). Most display devices, however, utilize a display frame rate of at least 50 or 60 Hz. Accordingly, in instances where the input video streams correspond to films, the video processing performed during video output generation and/or processing during display or playback may incorporate frame manipulation to produce output video streams that matches the display device's frame rate. In this regard, certain frames in the input video stream may be duplicated, for example, to increase the number of frames in the output video streams such that the output video stream would have a frame rate suitable the display device's frame rate

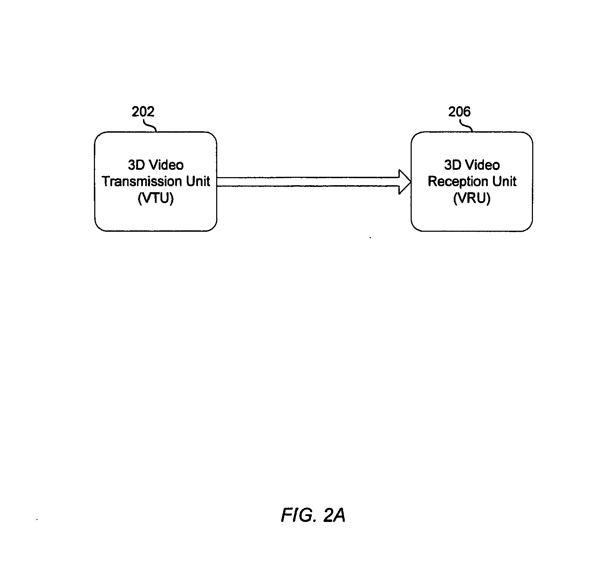

FIG. 2A is a block diagram illustrating an exemplary video system that may be operable to provide communication of 3D video, in accordance with an embodiment of the invention. Referring to FIG. 2A, there is shown a 3D video transmission unit (3D-VTU) 202 and a 3D video reception unit (3D-VRU) 204.

The 3D-VTU 202 may comprise suitable logic, circuitry, interfaces and/or code that may be operable to generate video streams that may comprise encoded/compressed 3D video data, which may be communicated, for example, to the 3D-VRU 204 for display and/or playback. The 3D video generated via the 3D-VTU 202 may be communicated via TV broadcasts, by one or more TV head-ends such as, for example, the terrestrial-TV head-end 104, the CATV head-end 110, the satellite head-end 114, and/or the broadband-TV head-end 118 of FIG. 1. The 3D video generated via the 3D-VTU 202 may be stored into multimedia storage devices, such as DVD or Blu-ray discs.

The 3D-VRU 204 may comprise suitable logic, circuitry, interfaces and/or code that may be operable to receive and process video streams comprising 3D video data for display and/or playback. The 3D-VRU 204 may be operable to, for example, receive and/or process transport streams comprising 3D video data, which may be communicated directly by, for example, the 3D-VTU 202 via TV broadcasts. The 3D-VRU 204 may also be operable receive video streams generated by the 3D-VTU 202, which are communicated indirectly via multimedia storage devices that may be played directly via the 3D-VRU 204 and/or via local suitable player devices. In this regard, the operations of the 3D-VRU 204 may be performed, for example, by the display device 102, the set-top box 122, and/or the AV player device 124 of FIG. 1. The received video streams may comprise encoded/compressed 3D video data. Accordingly, the 3D-VRU 204 may be operable to process the received video stream to separate and/or extract various video contents in the transport stream, and may be operable to decode and/or process the extracted video streams and/or contents to facilitate display operations.

In operation, the 3D-VTU 202 may be operable to generate video streams comprising 3D video data. The 3D-VTU 202 may encode, for example, the 3D video data as stereoscopic 3D video comprising left view and right view sequences. The 3D-VRU 204 may be operable to receive and process the video streams to facilitate playback of video content included in the video stream via appropriate display devices. In this regard, the 3D-VRU 204 may be operable to, for example, demultiplex received transport stream into encoded 3D video streams and/or additional video streams. The 3D-VRU 204 may be operable to decode the encoded 3D video data for display.

In an exemplary aspect of the invention, the 3D-VRU 204 may also be operable to perform necessary pulldown processing on received video data. In this regard, in instances where the frame rate of the received video stream may be less than the display frame rate, the 3D-VRU 204 may perform frame manipulation to generate output video streams for display and/or playback with appropriate frame rate that is suitable for the display frame rate. For example, in instances where the received video stream has frame rate of 24 fps and the display frame rate is 60 Hz, the 3D-VRU 204 may be operable to perform 3:2 pulldown. In instances where the received video stream has frame rate of 25 fps and the display frame rate is 50 Hz, the 3D-VRU 204 may be operable to perform 2:2 pulldown.

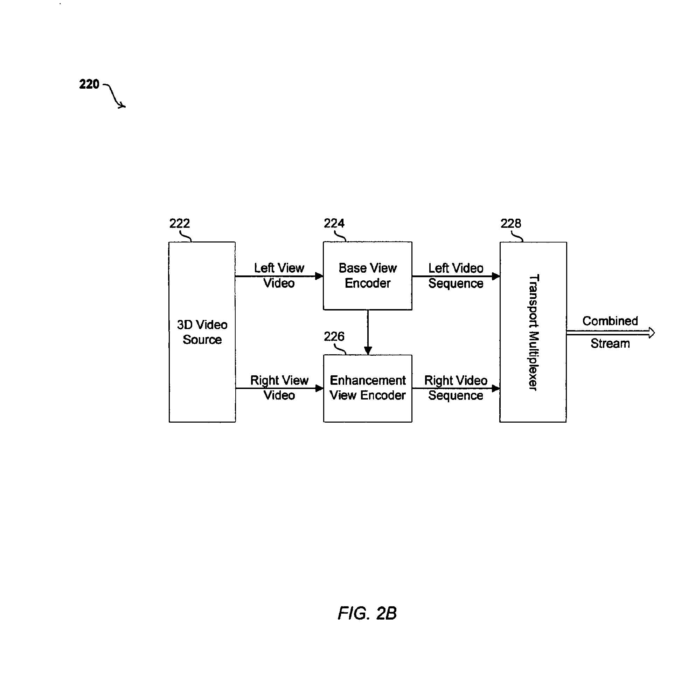

FIG. 2B is a block diagram illustrating an exemplary video processing system that may be operable to generate video streams comprising 3D video, in accordance with an embodiment of the invention. Referring to FIG. 2B, there is shown there is shown a video processing system 220, a 3D video source 222, a base view encoder 224, an enhancement view encoder 226, and a transport multiplexer 228.

The video processing system 220 may comprise suitable logic, circuitry, interfaces and/or code that may be operable to capture, generate, and/or process 3D video data, and to generate transport streams comprising the 3D video. The video processing system 220 may comprise, for example, the 3D video source 222, the base view encoder 224, the enhancement view encoder 226, and/or the transport multiplexer 228. The video processing system 220 may be integrated into the 3D-VTU 202 to facilitate generation of video and/or transport streams comprising 3D video data.

The 3D video source 222 may comprise suitable logic, circuitry, interfaces and/or code that may be operable to capture and/or generate source 3D video contents. The 3D video source 222 may be operable to generate stereoscopic 3D video comprising left view and right view video data from the captured source 3D video contents, to facilitate 3D video display/playback. The left view video and the right view video may be communicated to the base view encoder 224 and the enhancement view encoder 226, respectively, for video compressing.

The base view encoder 224 may comprise suitable logic, circuitry, interfaces and/or code that may be operable to encode the left view video from the 3D video source 222, for example on frame by frame basis. The base view encoder 224 may be operable to utilize various video encoding and/or compression algorithms such as those specified in MPEG-2, MPEG-4, AVC, VC1, VP6, and/or other video formats to form compressed and/or encoded video contents for the left view video from the 3D video source 222. In addition, the base view encoder 224 may be operable to communication information, such as the scene information from base view coding, to the enhancement view encoder 226 to be used for enhancement view coding.

The enhancement view encoder 226 may comprise suitable logic, circuitry, interfaces and/or code that may be operable to encode the right view video from the 3D video source 222, for example on frame by frame basis. The enhancement view encoder 226 may be operable to utilize various video encoding and/or compression algorithms such as those specified in MPEG-2, MPEG-4, AVC, VC1, VP6, and/or other video formats to form compressed or encoded video content for the right view video from the 3D video source 222. Although a single enhancement view encoder 226 is illustrated in FIG. 2B, the invention may not be so limited. Accordingly, any number of enhancement view video encoders may be used for processing the left view video and the right view video generated by the 3D video source 222 without departing from the spirit and scope of various embodiments of the invention.

The transport multiplexer 228 may comprise suitable logic, circuitry, interfaces and/or code that may be operable to merge a plurality of video sequences into a single compound video stream. The combined video stream may comprise the left (base) view video sequence, the right (enhancement) view video sequence, and a plurality of addition video streams, which may comprise, for example, advertisement streams.

In operation, the 3D video source 222 may be operable to capture and/or generate source 3D video contents to produce, for example, stereoscopic 3D video data that may comprise a left view video and a right view video for video compression. The left view video may be encoded via the base view encoder 224 producing the left (base) view video sequence. The right view video may be encoded via the enhancement view encoder 226 to produce the right (enhancement) view video sequence. The base view encoder 224 may be operable to provide information such as the scene information to the enhancement view encoder 226 for enhancement view coding, to enable generating depth data, for example. Transport multiplexer 228 may be operable to combine the left (base) view video sequence and the right (enhancement) view video sequence to generate a combined video stream. Additionally, one or more additional video streams may be multiplexed into the combined video stream via the transport multiplexer 228. The resulting video stream may then be communicated, for example, to the 3D-VRU 204, substantially as described with regard to FIG. 2A.

In an exemplary aspect of the invention, the left view video and/or the right view video may be generated and/or captured at frame rates that may be less than the frame rate of one or more corresponding display devices, which may be used to playback the video content encoded into the combined video stream. For example, for films, the left view video and/or the right view video may be captured at 24 or 25 fps. Accordingly, in instances where no frame manipulation and/or adjustment is performed via the base view encoder 224 and/or the enhancement view encoder 226 to account for specific display frame rates, pulldown processing may be performed via the end-user receiving/playing device when using the combined video stream during display operations, substantially as described with regard to, for example, FIG. 2A.

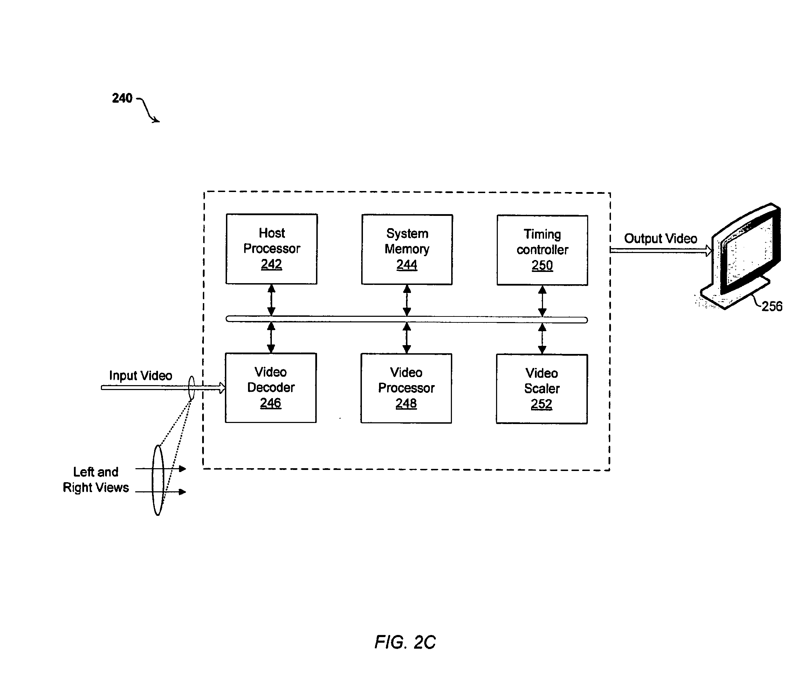

FIG. 2C is a block diagram illustrating an exemplary video processing system that may be operable to process and display video input comprising 3D video, in accordance with an embodiment of the invention. Referring to FIG. 2C there is shown a video processing system 240, a host processor 242, a system memory 244, an video decoder 246, a video processor 248, a timing controller 250, a video scaler 252, and a display 256.

The video processing system 240 may comprise suitable logic, circuitry, interfaces and/or code that may be operable to receive and process compressed and/or encoded video streams, which may comprise 3D video data, and may render reconstructed output video for display. The video processing system 240 may comprise, for example, the host processor 242, the system memory 244, the video decoder 246, the video processor 248, the video scaler 252, and the timing controller 250. The video processing system 240 may be integrated into the 3D-VRU 204, for example, to facilitate reception and/or processing of transport streams comprising 3D video content communicated by the 3D-VTU 202 via TV broadcasts and/or played back locally from multimedia storage devices. The video processing system 240 may be operable to handle interlaced video fields and/or progressive video frames. In this regard, the video processing system 240 may be operable to decompress and/or up-convert interlaced video and/or progressive video. The video fields, for example, interlaced fields and/or progressive video frames may be referred to as fields, video fields, frames or video frames. In an exemplary aspect of the invention, the video processing system 240 may be operable to perform video pulldown to compensate for variations between frame rate of input video streams and required frame rate of produced output video stream suitable for the display 256.

The host processor 242 may comprise suitable logic, circuitry, interfaces and/or code that may be operable to process data and/or control operations of the video processing system 240. In this regard, the host processor 242 may be operable configure and/or controlling operations of various other components and/or subsystems of the video processing system 240, by providing, for example, control signals to various other components and/or subsystems of the video processing system 240. The host processor 242 may also control data transfers with the video processing system 240, during video processing operations for example. The host processor 242 may enable execution of applications, programs and/or code, which may be stored in and retrieved from internal cache or the system memory 244, to enable, for example, performing various video processing operations such as decompression, motion compensation, interpolation, pulldown or otherwise processing 3D video data.

The system memory 244 may comprise suitable logic, circuitry, interfaces and/or code that may operable to store information comprising parameters and/or code that may effectuate the operation of the video processing system 240. The parameters may comprise configuration data and the code may comprise operational code such as software and/or firmware, but the information need not be limited in this regard. Additionally, the system memory 244 may be operable to store 3D video data, for example, data that may comprise left and right views of stereoscopic image data. The system memory 244 may also be utilized to buffer video data, for example 3D video data comprising left and/or right view video sequences, while it is being processed in the video processing system 240 and/or is transferred from one process and/or component to another. The host processor 242 may provide control signals to manage video data write/read operations to and/or from the system memory 244.

The video decoder 246 may comprise suitable logic, circuitry, interfaces and/or code that may be operable to process encoded and/or compressed video data. The video data may be compressed and/or encoded via MPEG-2 transport stream (TS) protocol or MPEG-2 program stream (PS) container formats, for example. The compressed video data may be 3D video data, which may comprise stereoscopic 3D video sequences of frames or fields, such as left and review view sequences. In this regard, the video decoder 246 may decompress the received separate left and right view video data based on, for example, MPEG-2 MVP, H.264 and/or MPEG-4 advanced video coding (AVC) or MPEG-4 multi-view video coding (MVC). In other embodiments of the invention, the stereoscopic left and right views may be combined into a single sequence of frames. For example, side-by-side, top-bottom and/or checkerboard lattice based 3D encoders may convert frames from a 3D stream comprising left view data and right view data into a single-compressed frame and may use MPEG-2, H.264, AVC and/or other encoding techniques. In this instance, the video data may be decompressed by the video decoder 246 based on MPEG-4 AVC and/or MPEG-2 main profile (MP), for example. The video decoder 246 may also be operable to demultiplex and/or parse received transport streams to extract streams and/or sequences therein, to decompress video data that may carried via the received transport streams, and/or may perform additional security operations such as digital rights management. Alternatively, a dedicated demultiplexer (not shown) may be utilized.

The video processor 248 may comprise suitable logic, circuitry, interfaces and/or code that may be operable to perform video processing operations on received video data to facilitate generating output video streams, which may be played via the display 256. The video processor 248 may be operable, for example, to generate video frames that may provide 3D video playback via the display 256 based on a plurality of view sequences extracted from the received video streams.

The timing controller 250 may comprise suitable logic, circuitry, interfaces and/or code that may be operable to control timing of video output operations into the display 256. In this regard, the timing controller 250 may be operable to determine and/or control various characteristics of the output video streams generated via the video processing system 240 based on preconfigured and/or dynamically determined criteria, which may comprise, for example, operational parameters of the display 256. For example, the timing controller 250 may determine resolution, frame rate, and/or scan mode of the display 256. In this regard, the scan mode may refer to whether the display 256 utilizes progressive or interlaced scanning. The display frame rate may refer to the frequency or number of frames, per second, that may be displayed via the display device 256. For example, in instances where the display 256 is utilized at 1080p60, the timing controller 250 may determine that the display 256 has a resolution of 1920x1080, a frame rate of 60, and is operating in progressive scanning mode—i.e., using frames rather than fields.

The video scaler 252 may comprise suitable logic, circuitry, interfaces and/or code that may be operable to adjust the output video streams generated via the video processing system 240 based on, for example, input provided via the timing controller 250. In this regard, the video scaler 252 may be operable to perform, alone and/or in conjunction with other processors and/or components of the video processing system 240 such as the video processor 248, pulldown processing. For example, in instances where the input video stream has a frame rate of 24 fps, and the required frame rate of the output video streams, as determined by the timing controller 250, is at a higher rate such 60 Hz, the video scaler 252 may determine one or more frames that may be duplicated to provide the required output frame rate.

The display 256 may comprise suitable logic, circuitry, interfaces and/or code that may be operable to display reconstructed and generated fields and/or frames of video data, shown as the output video steam, after processing via various components of the video processing system 240, and may render corresponding images. The display 256 may be a separate device, or the display 256 and the video processing system 240 may implemented as single unitary device. The display 256 may be operable to perform 3D video display. In this regard, the display 256 may render images corresponding to left view and right view video sequences, utilizing 3D video image rendering techniques.

In operation, the video processing system 240 may be utilized to facilitate reception and/or processing of video streams that may comprise 3D video data, and to generate and/or process output video streams that are playable via the display 256. the video data is received via transport streams communicated via TV broadcasts, processing the received transport stream may comprise demultiplexing the transport streams to extract plurality of compressed video sequences, which may correspond to, for example, view sequences and/or additional information. Demultiplexing the transport stream may be performed within the video decoder 246, or via a dedicated demultiplexer component (not shown). The video decoder 246 may be operable to receive the transport streams comprising compressed stereoscopic 3D video data, in multi-view compression format for example, and to decode and/or decompress that video data. For example, the received video streams may comprise left and right stereoscopic view video sequences. The video decoder 246 may be operable to decompress the received stereoscopic video data and may buffer the decompressed data into the system memory 244. The decompressed video data may then be processed to enable playback via the display 256. The video processor 248 may be operable to generate output video streams, which may be 3D and/or 2D video streams, based on decompressed video data. In this regard, where stereoscopic 3D video is utilized, the video processor 248 may process decompressed reference frames and/or fields, corresponding to plurality of view sequences, which may be retrieved from the system memory 244, to enable generation of corresponding 3D output video steam that may be further processed via other processors and/or components in the video processing system 240 prior to playback via the display 256.

In various embodiments of the invention, the video processing system 240 may be utilized to provide pulldown generating output video streams for playback via the display 256 based on processing or input video streams. In this regard, output video streams may initially be generated and/or formatted, via the video processor 248 for example, based on input video streams. The timing controller 250 may then be operable to determine operational parameters of the display 256. For example, the timing controller 250 may determine the display frame rate, the scanning mode, and/or the display resolution of the display 256. The mode of the received input video streams may be determined, via the video processor 248 for example. In this regard, the mode of the received input video stream may refer to whether the input video steam comprises film content. Based on the determined operational parameters, and on determination of mode of the input video stream, the output video stream may be further formatted and/or processed, via the video scaler 252 for example, such that the output video stream may be suitable for playback via the display 256. In this regard, the determined mode of the input video stream may be utilized to determine the frame rate of the input video stream. For example, in instances where the mode of input video stream indicates that the input video stream correspond to films, the frame rate of the input video stream may be determined to be, for example, 24 or 25 fps. Accordingly, the frame rate of the output video stream may be increased by adding, for example, one or more duplicated frames, such that the output video stream may have similar frame rate as the display frame rate of the display 256.

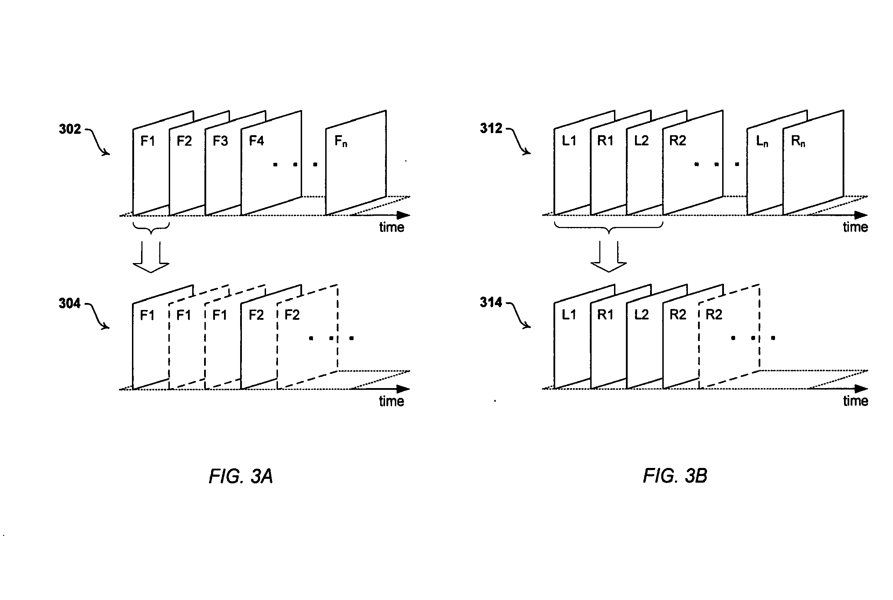

FIG. 3A is a block diagram illustrating an exemplary method for providing 3:2 pulldown for a traditional 2D video stream, in connection with an embodiment of the invention. Referring to FIG. 3A, there is shown a 2D input video stream 302 which may comprise a plurality of video frames. The 2D input video stream 302 may be encoded, for communication, based on a compression standard. In this regard, the 2D input video stream 302 may comprise a MPEG stream. Also shown in FIG. 3A is an output video stream 304, which may comprise a plurality of video frames generated for display via a specific display device, such as the display 256. The output video stream 304 may be generated based on the 2D input video stream 302 during playback operations.

The 2D input video stream 302 may correspond to video data generated and/or captured for films. In this regard, the 2D input video stream 302 may have a frame rate of 24 fps. The 2D input video stream 302 may be communicated via TV broadcasts. Alternatively, the 2D input video stream 302 may be encoded into a multimedia storage device, such as a DVD or a Blu-ray disc, to enable playback using an appropriate audio-visual player device, such as the AV player device 124. Once received, the 2D input video stream 302 may be processed for display. 2D input video stream 302.

In operation, the output video stream 304 may be generated based on the 2D input video stream 302, via the video processing system 240, when the 2D input video stream 302 is received via a TV broadcast or is read from a multimedia storage device via the AV player device 120. Furthermore, during playback operations the output video stream 304 may be further formatted and/or processed for display via the display 256 based on, for example, display operational parameters of the display 256, which may be determined via the timing controller 250. In this regard, the output video stream 304 may be formatted for playback via the display 256 when display frame rate is 60 Hz and progressive scanning is utilized. Accordingly, during video processing operations, 3:2 pulldown may be performed, via the video scaler 252 for example, on the 2D input video stream 302 when generating the output video stream 304. In this regard, in instances where the 2d video stream 302 has a frame rate of 24 fps, the display 256 utilizes progressive scanning, and the display frame rate of the display 256 is 60 Hz, 3:2 pulldown processing may be performed by generating, for each 2 frames in the 2D input video stream 302, 3 additional frames by duplicating the input two frames to produce 5 corresponding frames in the output video stream 304. For example, for frames 1 and 2 (F1 and F2) in the 2D input video stream 302 frame F1 may be duplicated once and frame F2 may be duplicated twice to produce 5 corresponding frames in the output video stream 304.

FIG. 3B is a block diagram illustrating an exemplary method for providing 3:2 pulldown for a 3D video stream, in accordance with an embodiment of the invention. Referring to FIG. 3B, there is shown a 3D input video stream 312 which may comprise a plurality of 3D video frames, which may corresponding to, for example, stereoscopic left and right view sequences. The 3D input video stream 312 may be encoded, for communication, based on a compression standard. In this regard, the 3D input video stream 312 may comprise a MPEG stream. Also shown in FIG. 3B is a 3D output video stream 314, which may comprise a plurality of video frames generated for display by a specific display device, such as the display 256. The 3D output video stream 314 may be generated based on the 3D input video stream 312.

The 3D input video stream 312 may correspond to video data generated and/or captured for 3D films. In this regard, each of the right view and right view video sequences in the 3D input video stream 312 may be generated with frame rate of 24 fps. Accordingly, the 3D input video stream 312 may have, as a total, a frame rate of 48 fps. The 3D input video stream 312 may be communicated via TV broadcasts. Alternatively, the 3D input video stream 312 may be encoded into a multimedia storage device, such as a DVD or a Blu-ray disc, to enable playback using an appropriate audio-visual player device, such as the AV player device 124. Once received, the 3D input video stream 312 may be processed for display.

In operation, the 3D output video stream 314 may be generated based on the 3D input video stream 312, via the video processing system 240 for example, when the 3D input video stream 312 is received via a TV broadcast or is read from a multimedia storage device via the AV player device 120. Where the display 256 is operable to render 3D images, the 3D output video stream 314 may comprise left view and right view frames. Furthermore, during playback operations the output video stream 314 may be further formatted and/or processed for display by the display 256 based on, for example, display operational parameters of the display 256, which may be determined via the timing controller 250. In this regard, the 3D output video stream 314 may be formatted for playback by the display 256 when the display frame rate is 60 Hz and progressive scanning is utilized. Accordingly, during video processing operations, a 3:2 pulldown may be performed, via the video scaler 252 for example, on the 3D input video stream 312 when generating and/or processing the 3D output video stream 314. In this regard, because the 3D input video stream 312 has total frame rate of 48 fps, the display 256 utilizes progressive scanning, and the display frame rate of the display 256 is 60 Hz, the 3:2 pulldown processing may be performed by generating, for each 2 groups of left and right frames in the 3D input video stream 312, one additional frame, by duplicating one of the four input two frames, to produce a total of 5 frames. For example, for the left frame 1 (L1), the right frame 1 (R1), the left frame 2 (L2), and the right frame 2 (R2) in the 3D input video stream 312, one of these four frames may be duplicated to produce 5 corresponding frames in the 3D output video stream 314. In the embodiment of the invention illustrated with respect to FIG. 3B, the frame R2 may be duplicated. This approach may be efficient because the frame R2 may be the last buffered frame during video processing operations in the video processing system 240. The invention, however, need be so limited and other selection criteria may be specified. For example, because in stereoscopic 3D video left view may be utilized as the primary/base view, the left view frames may comprise more data than corresponding right frames. Accordingly, in the above exemplary embodiment, the frame L2 may be duplicated during 3:2 pulldown operations instead of the frame R2.

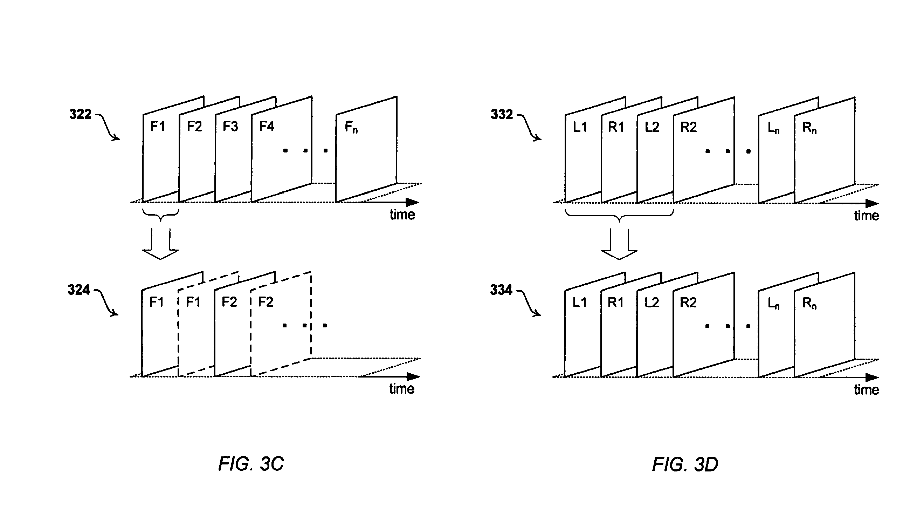

FIG. 3C is a block diagram illustrating an exemplary method for providing 2:2 pulldown for a traditional 2D video stream, in connection with an embodiment of the invention. Referring to FIG. 3C, there is shown a 2D input video stream 322 which may comprise a plurality of video frames. The 2D input video stream 322 may be encoded, for communication, based on a compression standard. In this regard, the 2D input video stream 302 may comprise a MPEG stream. Also shown in FIG. 3C is an output video stream 324, which may comprise a plurality of video frames generated for display via a specific display device, such as the display 256. The output video stream 324 may be generated based on the 2D input video stream 322.

The 2D input video stream 322 may correspond to video data generated and/or captured for films. In this regard, the 2D input video stream 322 may have a frame rate of 25 fps. The 2D input video stream 322 may be communicated via TV broadcasts. Alternatively, the 2D input video stream 322 may be encoded into a multimedia storage device, such as a DVD or a Blu-ray disc, to enable playback using an appropriate audio-visual player device, such as the AV player device 124. Once received, the 2D input video stream 322 may be processed for display.

In operation, the output video stream 324 may be generated based on the 2D input video stream 322, via the video processing system 240, when the 2D input video stream 322 is received via a TV broadcast or is read from a multimedia storage device via the AV player device 120. Furthermore, during playback operations the output video stream 324 may be further formatted and/or processed for display via the display 256 based on, for example, display operational parameters of the display 256, which may be determined via the timing controller 250. In this regard, the output video stream 324 may be formatted for playback via the display 256 where the scanning mode is progressive and the display frame rate is 50 Hz. Accordingly, during video processing operations, a 2:2 pulldown may be performed, via the video scaler 252 for example, on the 2D input video stream 322 when generating the output video stream 324. In this regard, where the 2d video stream 322 has a frame rate of 25 fps, the display scanning mode of the display 256 is progressive, and the display frame rate of the display 256 is 50 Hz, the 2:2 pulldown may be performed by generating, for each 2 frames in the 2D input video stream 322, 2 additional frames by duplicating the input two frames to produce 4 corresponding frames in the output video stream 324. For example, each of the frames 1 and 2 (F1 and F2) in the 2D input video stream 322 may be duplicated once to produce 4 corresponding frames in the output video stream 324.

FIG. 3D is a block diagram illustrating an exemplary method for providing 2:2 pulldown for a 3D video stream, in accordance with an embodiment of the invention. Referring to FIG. 3D, there is shown a 3D video stream 332 which may comprise a plurality of 3D video frames corresponding to, for example, stereoscopic left and right view sequences. The 3D input video stream 332 may be encoded, for communication, based on a compression standard. In this regard, the 3D input video stream 332 may comprise a MPEG stream. Also shown in FIG. 3D is a 3D output video stream 334, which may comprise a plurality of video frames generated for display via a specific display device, such as the display 256. The 3D output video stream 334 may be generated based on the 3D video stream 332 during playback operations.

The 3D video stream 332 may correspond to video data generated and/or captured for 3D films. In this regard, each of the right view and right view video sequences in the 3D video stream 332 may be generated with frame rate of 25 fps. Accordingly, the 3D video stream 332 may have, as a total, a frame rate of 50 fps. The 3D video stream 332 may be communicated via TV broadcasts. Alternatively, the 3D video stream 332 may be encoded into a multimedia storage device, such as a DVD or a Blu-ray disc, to enable playback using an appropriate audio-visual player device, such as the AV player device 124. Once received, the 3D video stream 332 may be processed for display.

In operation, the 3D output video stream 334 may be generated based on the 3D video stream 332, via the video processing system 240 for example, when the 3D video stream 332 is received via a TV broadcast or is read from a multimedia storage device via the AV player device 120. In instances where the display 256 is operable to render 3D images, the 3D output video stream 334 may comprise left view and right view frames. Furthermore, during playback operations the output video stream 334 may be further formatted and/or processed for display via the display 256 based on, for example, display operational parameters of the display 256, which may be determined via the timing controller 250. In this regard, the 3D output video stream 334 may be formatted for playback via the display 256 where the scanning mode is progressive and the display frame rate is 50 Hz. Accordingly, during video processing operations, a 2:2 pulldown may be performed, via the video scaler 252 for example, on the 3D video stream 332 when generating and/or processing the 3D output video stream 334. In this regard, because the 3D video stream 332 has total frame rate of 50 fps, the display 256 utilizes progressive scanning, and the display frame rate of the display 256 is 50 Hz, no frame duplication would be necessary to effectuate 2:2 pulldown effect. Accordingly, the 3D output video stream 334 may simply comprise the same frames in the 3D input video stream 332.

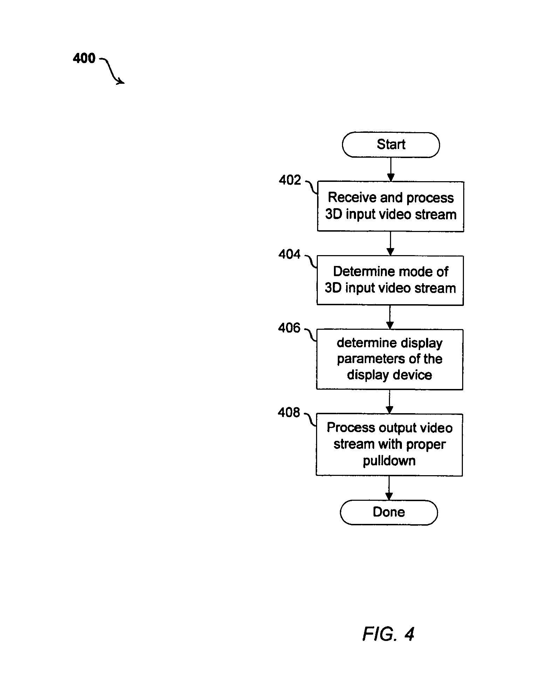

FIG. 4 is a flow chart that illustrates exemplary steps for pulldown processing for 3D video, in accordance with an embodiment of the invention. Referring to FIG. 4, there is shown a flow chart 300 comprising a plurality of exemplary steps that may be performed to enable 3:2 pulldown for 3D video.

In step 402, 3D input video stream may be received and processed. For example, the video processing system 240 may be operable to receive and process input video streams comprising compressed video data, which may correspond to stereoscopic 3D video. In this regard, the compressed video data may correspond to a plurality of view video sequences that may be utilized to render 3D images via a suitable display device. Processing the received input stream may comprise generating a corresponding output video stream that may be utilized to playback the input video stream via corresponding video stream. In step 404, a mode of the received 3D input video stream may be determined. In this regard, the mode of the received 3D input video stream may refer to whether the 3D input video steam comprises film content. The video processor 248 and/or video scaler 252, for example, may be operable to determine the mode of the received input video stream. The determined mode of the input video stream may be utilized to determine the capture/generation frame rate. In this regard, in instances where the 3D input video stream correspond to films, the frame rate for each of the view sequences, for example the left view and the right view sequence, may be 24 or 25 fps. In step 406, display operational parameters of the display device to be utilized in playback operations of the received input video stream may be determined. For example, the timing controller 250 may be operable to determine the scanning mode and/or the display frame rate of the display 256. In step 408, the output video stream may be further processed, based on the determined mode of the input video stream and/or the operational parameters of the display device to produce the proper pulldown. In this regard, one or more frames may duplicated to increase the frame rate of the output video stream where the display frame rate is higher than the frame rate of the input video stream, substantially as described with regard to, for example, FIGs. 3B and 3D.

Various embodiments of the invention may comprise a method and system for pulldown processing for 3D video. The video processing system 240 may be operable to receive and process input video streams that may comprise 3D video. The video processing system 240 may determine, via the video processor 248 for example, native characteristics associated with a received input three dimensional (3D) video stream and may generate output video stream, which correspond to the input 3D video stream, for playback via the display 256. A pulldown of the received input 3D video stream may be performed and/or modified via the video processing system 240 based on the determined native characteristics of the input 3D video stream and display parameters corresponding to a display 256 that may be utilized for presenting the generated output video stream. The native characteristics associated with the input 3D video stream may comprise film mode, which may indicate that the received input 3D video stream may comprise video content generated and/or captures for films. The capture and/or generation frame rate of the input 3D video stream may be determined, via the video processor 248, based on, for example, the determined native characteristics associated with the input 3D video stream. The display parameters may be determined dynamically, via the timing controller 250 for example. The display parameters may comprise display frame rate and/or scan mode, wherein the scan mode may comprise progressive or interlaced scanning. The input 3D video stream may comprise stereoscopic 3D video content that may correspond to sequences of left and right reference frames or fields.

In instances where the native characteristics associated with the input 3D video stream comprise a film mode with 25 fps frame rate and the display parameters corresponding to the display parameters comprise 50 Hz progressive scanning, the video scaler 252 may forward received left and right view sequences of frame without change to achieve 3:2 pulldown. In instances where the native characteristics associated with the input 3D video stream comprise a film mode with 24 fps frame rate and the display parameters corresponding to the display parameters comprise 60 Hz progressive scanning, the video scaler may perform 3:2 pulldown by duplicating a left view frame or a right view frame in every group of four frames in the input 3D video stream comprising two consecutive left view frames and corresponding two consecutive right view frames. The duplicated frame may be selected, via the video scaler 252 for example, based on a last buffered frame during the processing of the output video stream. Alternatively, other criteria may be utilized, by the video scaler 252, in selecting duplicated frame, such as desired quality and/or sharpness parameters.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for pulldown processing for 3D video.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for video processing, the method comprising:
performing by one or more processors and/or circuits in a video processing system:
determining one more native characteristics associated with an input three dimensional (3D) video stream; and
generating one or more output video streams that correspond to said input 3D video stream, wherein a pulldown of said input 3D video stream is modified based on said determined one or more native characteristics and display parameters corresponding to a one or more display devices that are utilized for presenting said generated one or more output video streams.

2. The method according to claim 1, wherein said one more native characteristics associated with said input 3D video stream comprise film mode.

3. The method according to claim 1, comprising determining frame rate of said input 3D video stream based on said determined one more native characteristics associated with said input 3D video stream.

4. The method according to claim 1, comprising dynamically determining said display parameters.

5. The method according to claim 1, wherein said display parameters comprise display frame rate and/or scan mode.

6. The method according to claim 5, wherein said scan mode comprises progressive or interlaced scanning.

7. The method according to claim 1, wherein said input 3D video stream comprises sequences of left and right reference frames or fields.

8. The method according to claim 7, comprising forwarding left view frames and corresponding right view frames to said one or more display devices without any frame duplication when said one more native characteristics associated with said input 3D video stream comprises a film mode with 25 frame per second (fps) frame rate and said display parameters comprise 50 Hz progressive scanning.

9. The method according to claim 7, comprising duplicating a left view frame or a right view frame for every group of four frames in said input 3D video stream comprising two consecutive left view frames and corresponding two consecutive right view frames when said one more native characteristics associated with said input 3D video stream comprises a film mode with 24 frame per second (fps) frame rate and said display parameters comprise 60 Hz progressive scanning.

10. The method according to claim 9, comprising selecting said duplicated frame based on a last buffered frame during said processing of said output video stream.

11. A system for video processing, the system comprising:
one or more circuits and/or processors that are operable to determining one more native characteristics associated with an input three dimensional (3D) video stream; and
said one or more circuits and/or processors are operable to generate one or more output video streams that correspond to said input 3D video stream, wherein a pulldown of said input 3D video stream is modified based on said determined one or more native characteristics and display parameters corresponding to a one or more display devices that are utilized for presenting said generated one or more output video streams.

12. The system according to claim 11, wherein said one more native characteristics associated with said input 3D video stream comprise film mode.

13. The system according to claim 11, wherein said one or more circuits and/or processors are operable to determine frame rate of said input 3D video stream based on said determined one more native characteristics associated with said input 3D video stream.

14. The system according to claim 11, wherein said one or more circuits and/or processors are operable to dynamically determine said display parameters.

15. The system according to claim 11, wherein said display parameters comprise display frame rate and/or scan mode.
